(19) Europäisches Patentamt
European Patent Office
Office européen des brevets

(11) **EP 1 873 951 A1**

(12) **EUROPEAN PATENT APPLICATION**

(43) Date of publication:
**02.01.2008 Bulletin 2008/01**

(51) Int Cl.:
**H04L 1/00** (2006.01)

(21) Application number: **06425449.3**

(22) Date of filing: **28.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Siemens S.p.A.**
**20126 Milano (IT)**

(72) Inventors:
• **Masseroni, Carlo**
  **20017 Rho (MI) (IT)**
• **Trivisonno, Riccardo**
  **20146 Milano (IT)**

(74) Representative: **Giustini, Delio**
**Siemens Holding S.p.A.**
**Viale Piero e Alberto Pirelli, 10**
**20126 Milano (IT)**

(54) **A method and system for radio link adaptation, related network and computer program product**

(57)   A radio link connecting a mobile terminal to a communication network, is adapted by varying (112, 114, 122) the Modulation and Coding scheme over the radio link as a function of both a signal-to-disturbance ratio (e.g. the Carrier to Interference-plus-Noise Ratio or CINR) measured (104, 120, 128) over the link and at least one of a mobility profile (100, 116, 124) of the mobile terminal and a Quality of Service class (106, 108) associated with the link.

*Fig. 3*

**Description**

Field of the Invention

The invention relates to techniques for radio link adaptation.

The invention was developed with specific attention paid to its possible use in Radio Link Control (RLC) in mobile communications. A presently preferred field of use of the invention are so-called WiMAX systems (IEEE802.16e standard). However, reference to these preferred areas of use is not to be construed in a limiting sense of the scope of the invention.

Description of the related art

Radio Link Control is one of the key functions in ensuring proper operation of a mobile communication network. This function represents the subject matter of fairly extensive technical literature and documentation such as e.g.:

(1) - IEEE Computer Society and IEEE Microwave Theory and Techniques Society, "IEEE Standard for Local and Metropolitan Area Networks Part 16: Air Interface for Fixed Broadband Wireless Access Systems", IEEE Std 802.16-2004 (Revision of IEEE Std 802.16-2001), 1 October 2004;

(2) - LAN MAN Standards Committee of the IEEE Computer Society and IEEE Microwave Theory and Techniques Society, "Draft IEEE Standard for Local and Metropolitan Area Networks Corrigendum to IEEE Standard for Local and Metropolitan Area Networks - Part 16: Air Interface for Fixed Broadband Wireless Access Systems", IEEE P802.16-2004/Cor1/D5, 12 September 2005;

(3) - LAN MAN Standards Committee of the IEEE Computer Society and IEEE Microwave Theory and Techniques Society, "Draft IEEE Standard for Local and Metropolitan Area Networks Part 16: Air Interface for Fixed and Mobile Broadband Wireless Access Systems. Amendment for Physical and Medium Access Control Layers for Combined Fixed and Mobile Operation in Licensed Bands", IEEE P802.16e/D12, October 2005;

(4) - Wireless Personal Communications 23: 137-145, 2002 - "On the Dynamics of Link Adaptation Updating Periods for Packet Switched Systems"; Javier Gozalvez and John Dunlop; Department of Electronic and Electrical Engineering, University of Strathclyde.

These documents indicated as (1) to (4) will be repeatedly referred to throughout this description.

While the possible scenario of application of the invention extends to any kind of wireless mobile system, preferably of the type supporting different QoS profiles, an area where radio link control (RLC) becomes particularly critical is downlink (DL) radio link control (RLC) in WiMAX wireless mobile systems (IEEE 802.16e standard). This applies primarily to the case of DL Link Adaptation with physical layer in TDD and in PUSC mode of operation, where the frequency carriers that comprise an OFDMA sub-channel are selected from the available bandwidth in a non-contiguous manner.

The acronyms used throughout this description and the technical concepts underlying such acronyms are well known to those of skill in the art, thus making it unnecessary to provide a detailed explanation herein: for instance, both TDD and PUSC operation are discussed in the documents designated as (1) and (3) in the foregoing.

In order to be truly efficient, a Link Adaptation (LA) arrangement should meet a number of basic requirements.

An effective link adaptation mechanism should take into account mobile station (MS) mobility and Quality of Service (QoS) requirements. Additionally, the Link Adaptation (LA) mechanism should be able to be fully implemented on the Base Station (BS) side, with the aim of choosing the most suitable Modulation and Coding Scheme (MCS) for data transmission according to the radio link quality of each Mobile Terminal (MT).

Object and summary of the invention

The object of the invention is thus to provide a fully satisfactory response to the needs/requirements outlined in the foregoing.

According to the present invention, that object is achieved by means of a method having the features set forth in the claims that follow. The invention also relates to a corresponding system as well as a related network, such as a WiMAX system (IEEE802.16e), and a computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein provides a DL link adaptation arrangement for e.g. the IEEE802.16e standard in PUSC mode of allocation. Such a preferred link adaptation arrangement is based both on MS Mobility and on QoS, in that i.e. different MCS (i.e. Modulation and Coding Scheme) selection criteria can be used according to both the MS mobility profiles and the QoS class of the service carried by the radio connection.

An exemplary embodiment of the arrangement described herein uses a reactive MCS selection criterion for services not belonging to UGS and e-RTVR QoS class. The same criterion is also used in case of UGS and e-RTVR, if a low mobility MS profile is estimated. Conversely, a conservative MCS selection criterion is used in case of UGS and e-RTVR, if a high mobility MS profile is estimated.

Preferably, an arrangement based on the concept outlined in the foregoing relies on two different logical functions that have to be accomplished on the BS side, namely:

- session QoS class identification
- MS (or MT) mobility profile clustering, i.e. grouping the Mobile Stations (or Mobile Terminals - as used herein, Mobile Station and Mobile Terminal will be considered to be synonymous terms) according to the mobility class to which they belong - pedestrian, low mobility and high mobility classes may be considered possibly in addition to a "static" or "stationary" class (i.e. no mobility).

MS mobility clustering can be performed via the computation and the evaluation of the error in the prediction of the expected CINR (Carrier to Interference-plus-Noise Ratio) evaluated over the frame preamble, e.g. via a NMLS (Normalized Least Mean Square) procedure.

The arrangement described herein is capable of fully implementing a DL Link Adaptation (LA) mechanism on the Base Station (BS) side, with the aim of choosing the most suitable Modulation and Coding Scheme (MCS) for data transmission according to the radio link quality of each Mobile Terminal (MT). Preferably, MCS selection is based on three different joint criterions:

- evaluation of the radio link quality in terms of DL average CINR estimated on all the frequencies included in a frame;
- identification of the Mobile Terminal mobility profiles
- identification of the QoS class to which the connection belongs.

Brief description of the annexed representations

The invention will now be described, by way of example only, with reference to the enclosed representations, wherein:

- Figure 1 is an exemplary diagram of performance of various Modulation and Coding Schemes (MCSs) for OFDMA transmission systems;

- Figure 2 is a detailed flowchart of the processing steps performed in the Link Adaptation (LA) arrangement described herein;

- Figure 3 is a block diagram exemplary of exploitation of the Normalized Least Mean Square (NMLS) prediction procedure;

- Figure 4 is an exemplary diagram of the average (or mean) prediction error obtained by using the NMLS procedure in the Link Adaptation (LA) arrangement described herein; and

- Figure 5 is exemplary of Modulation and Coding Scheme (MCS) threshold steps in the Link Adaptation (LA) arrangement described herein.

Detailed description of preferred embodiments of the invention

As already indicated, a possible scenario of application of the arrangement described herein includes any kind of wireless mobile system supporting different QoS profiles. By way of example, the following description will refer to downlink (DL) radio link control (RLC) in a WiMAX wireless mobile system (IEEE 802.16e standard).

In general terms (and without any need of providing a pictorial representation of the related architecture, which is well known in the art) such a system will include a number of Mobile Stations (MSs), also referred to as Mobile Terminals (MTs), served by a number of Base Stations (BSs). Specifically, the exemplary case will be considered here of downlink Link Adaptation with physical layer in TDD and in PUSC mode of operation, where the frequency carriers that comprise an OFDMA sub-channel are selected from the available bandwidth in a non-contiguous manner. Unless otherwise indicated, the processing tasks described in the following are performed with the Base Stations.

By way of background to the detailed description that follows, some basic concepts of operation of a mobile system in compliance with the IEEE 802.16e standard will be summarized here. Specifically, these basic concepts apply to:

- CINR measurement and reporting;
- MCS selection as a function of the measured CINR; and
- the QoS profiles of the services/applications involved.

The IEEE 802.16e Radio Interface in a WiMAX wireless mobile system receives measurements of the average Carrier to Interference-plus-Noise Ratio or CINR at the MTs that are reported to the BSs with a given Measurements Reporting Rate. This Radio Interface is thus adapted to perform radio link quality estimation on the BS side based on the CINR reports that the MTs send to the BS. It will be appreciated that CINR measurements are exemplary of the general class of signal-to-disturbance measurements, so that the scope of the invention is in no way limited to the arrangements that specifically rely on CINR as an entity representative of signal-to-disturbance ration over a limit.

Assuming (in a thoroughly sensible way) inter-site synchronization, each MT calculates the average of the CINR as measured at all the frequencies included in the frame preamble which is interfered directly by the frame preambles of interfering cells. As the frame preambles are transmitted with the maximum power allowed in the system, the CINR thus estimated corresponds to a "worst case" condition when compared with the actual CINR values experienced by the data transmitted as the frame payload.

As attested e.g. by the documents indicated as (1), (2), and (3) in the introductory portion of this description, the channel reporting message mechanism according to the 802.16e standard provides for a time shift of two frames between the time to which the CINR measure refers and the time at which a proper MCS is selected based on that measurement.

By considering a frame duration of 5ms, a measurement is thus implicitly considered by the LA procedure as reliable for at least 10ms. Since the WiMAX system can support a variety of MT mobility profiles (ranging from stationary MTs to high mobility MTs), the reliability of CINR measurement varies case by case. Consequently, the rate at which a BS requests/obtains measurements from the MTs is tuned according to the (dynamic and varying) MT mobility profile. On the other hand, the reporting rate is limited in order to avoid "swamping" the uplink (UL) frame portion with signaling.

The IEEE 802.16e standard was primarily defined to permit broadband wireless access of a plurality of MT mobility profiles. Four mobility profiles can be typically considered: stationary users, pedestrian users, low mobility and high mobility users.

The mobility profile of a single MT has impact on the LA procedure for two correlated reasons:

- the reliability of a CINR measurement decreases over the time as the MT speed increases; hence, using different MCS selection methods according to the MT mobility profile is advantageous;
- the rate at which the BS requests/obtains CINR reports should be related to the MT mobility profile, in order to secure reliable channel quality estimation while wasting a minimum amount of UL bandwidth for signaling.

In order to achieve the goal outlined in the foregoing, the LA procedure described herein "clusters" the various MTs according to their mobility profiles.

Another point of interest lies in the evaluation of performance of various MCSs v. the average CINR and the ensuing criteria adopted for MCS selection. In fact, if the radio link quality estimation available is acceptable, the possibility exists of selecting an "optimum" MCS for e.g. DL data transmission.

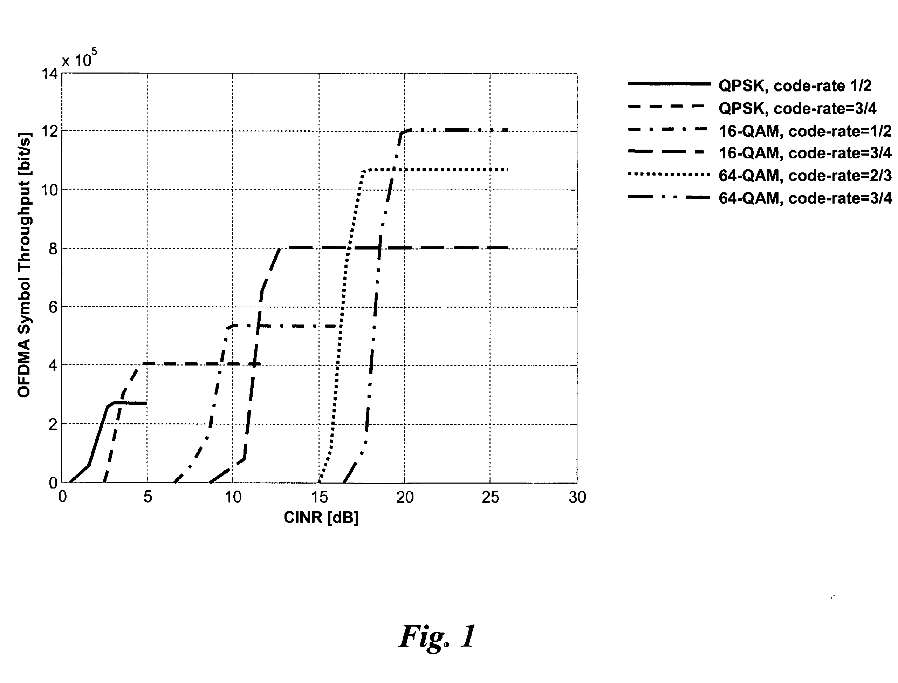

As portrayed in figure 1, various MCS selections (e.g. QPSK, 16-QAM, 64-QAM, with different code rates such as 1/2 or 3/4) give rise to different performance levels (expressed e.g. as OFDMA Symbol Throughput) as a function of a signal-to-disturbance ratio. In the exemplary embodiment described herein the signal-to-disturbance ratio is represented by the average symbol CINR (in dB). The usual approach, commonly used in the LA procedures as described in the document indicated as (4) in the introductory portion of this description, is to select the MCS by following the envelope of MCS performance curves, i.e. by selecting, for each CINR value, the Modulation and Coding Scheme that gives the highest OFDMA Symbol Throughput.

However, this approach is not fully satisfactory for at least three different reasons:

- the channel quality estimation relies on an average CINR, which may be significantly different from the actual CINR experimented during the DL transmission: the data transmitted may in fact fail to span over the whole frequency range of the frame (moreover, the portion of the frame on which the data will be transmitted cannot be predicted in advance);

- the slope of MCS performance curves is very high (this is clearly visible in figure 1) : the transition between the minimum and the maximum throughput achievable takes place in a range of a few dBs (2-4dB); even a relatively small error in the CINR estimation may lead to a significant error in the choice of the MCS, whereby a more conservative approach should be used in varying the MCS as a function of the CINR data;
- the standard allows the MTs to probe the CINR value with an absolute error of 1dB.

Another factor to take into account lies in that different QoS classes may require different MCS selection criteria.

Still by way of background to the detailed description of an exemplary embodiment of the invention, it is recalled that the IEEE 802.16e standard (see e.g. the document indicated as (3) in the introductory portion of this description) identifies the following QoS classes:

- Best Effort (BE): i.e. services/applications with no specific rate or delay requirements;
- Non-Real-Time Variable Rate (NRT-VR): this QoS profile applies to services/applications that require a guaranteed data rate but are insensitive to delay, so that the data rate can be limited to some maximum value;
- Real-Time Variable Rate (RT-VR): this QoS profile applies to real-time data services/applications with variable bit rates that require guaranteed data rate and delay;
- Extended Real-Time Variable Rate (ERT-VR): this QoS profile applies to real-time services/applications with variable data-rates, which require guaranteed data and delay i.e. VoIP (Voice over IP) with silence suppression);
- Unsolicited Grant Service (UGS): this QoS profile applies to Real-Time services/applications generating fixed rate data; these data can be provided as either fixed or variable length PDUs.

VoIP-like services are mapped onto UGS and ERT-VR QoS classes have strict constraints in terms of application packet delay and jitter. Unacknowledged protocols (both end-to-end - transport layer protocols - and radio protocol - MAC layer protocols) are generally adopted for these classes and services. Hence the application packet loss requirement is to be guaranteed via a proper LA procedure able to limit the loss of data due to the variable quality of the radio link. A conservative MCS selection criterion can be used in this case.

Other services, such as streaming video, mapped onto a RT-VR QoS class, adopt unacknowledged protocols at the end-to-end layer and acknowledged protocols on the radio interface; finally, non real time services such as FTP, e-mail etc. (mapped onto NRT-VR and BE QoS class) as adopt acknowledged protocols at both the end-to-end and at the radio levels. A more reactive MCS selection criterion is advantageous in this case, as the reliability in terms of loss ratio is guaranteed at different levels and it is not demanded to the LA procedure.

Specifically, the IEEE 802.16e standard defines the physical layer and the Medium Access Control layer (MAC) of the broadband wireless access system (BWA). The MAC layer comprises three sublayers: Convergence Sublayer (CS), Common Part Sublayer (CPS) and the Security Sublayer.

QoS class identification is permitted by MAC SDU classification executed by the Convergence Sublayer. Classification is the process according to which a MAC SDU is mapped onto a particular connection for transmission between MAC peers (see again the document indicated as (1) in the introductory portion of the description). The mapping process associates a MAC SDU with a connection, which also creates an association with the service flow characteristics of that connection. The service flow characteristics of a connection provide the QoS for the packets of that connection packets. Each connection has an associated connection identifier (CID). Therefore a Link Adaptation procedure can trace the QoS class of each packet simply by knowing the CID.

Essentially, the arrangement described herein improves performance of a mobile system such as e.g. a system in compliance with the IEEE 802.16e by:

- identifying QoS classes for the connections in the system via the connection identifiers (CIDs) associated to the connections;
- identifying a mobility profile for the MTs and adjusting correspondingly the Measurement Reporting Rate of the CINR;
- selecting the MCS as a function of the results of the previous steps.

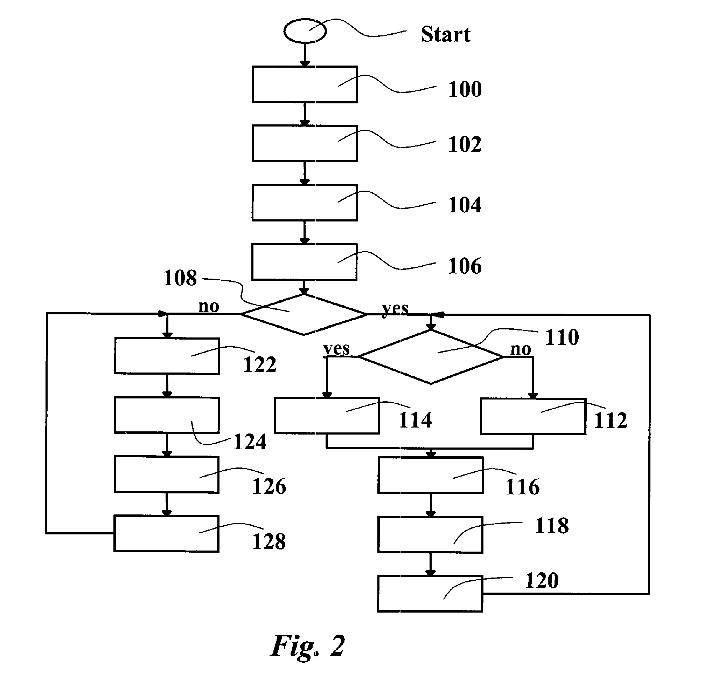

The flowchart of figure 2 portrays an exemplary detailed sequence of steps for performing the process outlined in the foregoing.

After a START step, in a step 100 the system described herein estimates the mobility of the various MTs to proceed to "clustering" the MTs according to various mobility profiles. Such estimation is a basic step for determining (i.e. adjusting, in a step 102) the proper rate at which CINR measurements reports are requested from the MTs to subsequently choose a proper MCS selection criterion adapted to the mobility profiles of the MTs.

It will be appreciated that identifying a precise value for the speed a MT is moving is not necessary. In fact a relatively rough indication of the degree of mobility (mobility profile) will permit to distinguish between a static or stationary MT, a pedestrian MT (e.g. a MT carried by a person walking), a low mobility MT, and a high mobility MT.

Preferably, clustering of MTs according to their mobility profiles is performed on the basis of a CINR prediction as detailed in the following. The main purpose of the related procedure is to estimate the mobility profile of each user (i.e. each MT) and use this information to select, in a dynamic way, the period between two subsequent CINR reports in order to choose a proper MCS with the capability of following channel variations. This interval, measured in number of frames, will be indicated as $\Delta T$ in the following.

In the presently preferred embodiment of the arrangement described herein, the procedure for CINR estimation is based on a NLMS (Normalized Least Mean Square) prediction technique. Such a technique is well known in the art (see e.g. B. Widrow, M. Kamenetsky, "On the Statistical Efficiency of the LMS Family of Adaptive Algorithms", IEEE ijcnn 2003 and A.M Adas, "Using Adaptive Linear Prediction to Support Real-Time VBR Video Under RCBR Network Service Model", IEEE/ACM Transactions on Networking, vol.6, N.5, October 1998) thus making it unnecessary to provide a more detailed description herein

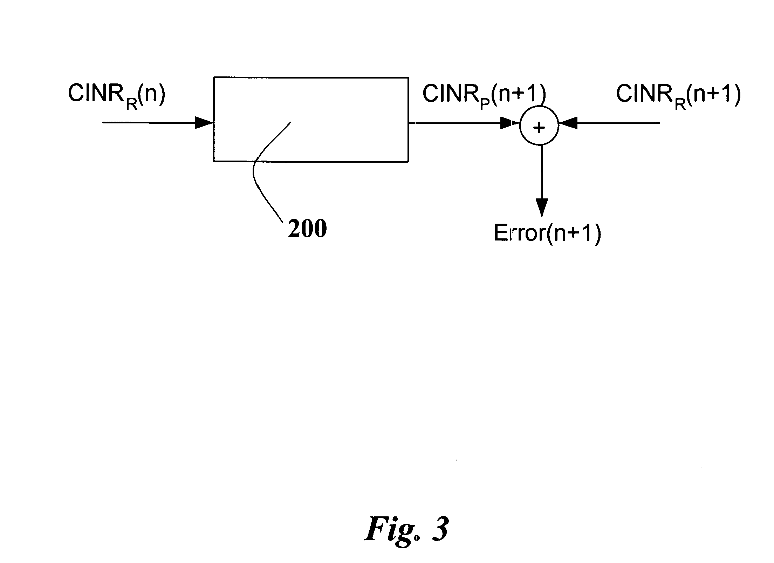

As schematically shown in Figure 3, the procedure receives at every $\Delta T$ frames a channel quality report that carries a CINR sample ($CINR_R(n)$). In the next sample ($CINR_p(n+1)$) is predicted in a predictor module 200, the prediction will be inevitably associated with a prediction error i.e.

$$\text{Error } (n+1) = (CINR_R(n+1)) - (CINR_P(n+1))$$

where the suffixes R and P denote the Real (i.e. actual) sample and the Predicted sample, respectively.

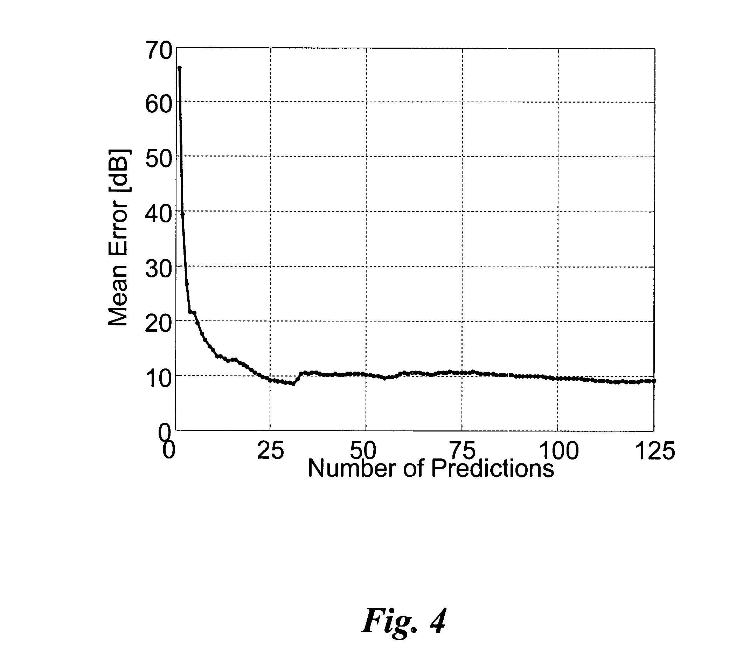

If a user is moving at constant speed, the average value of the prediction error will decrease as the number of predictions increases. Specifically, the average value of the prediction will decrease rapidly during an initial transient period of N predictions (e.g. 25 predictions) and then settles around a minimum value as shown in Figure 4.

This value depends on the MT mobility profile and on the period $\Delta T$ between two reports. The possibility thus exists of defining different $\Delta T$ values, suitable for different mobility profiles. These values are chosen as a trade-off between performance (accuracy in following channel variations) and UL bandwidth taken to send periodic reports.

Obviously, by using small $\Delta T$ values the MCS selections will be more accurate than those computed with larger $\Delta T$ values but this involves a high report rate. In a Pedestrian profile, high values of $\Delta T$ are admissible because channel variation due to mobility is slow. Conversely, small $\Delta T$ values are suitable for user having a high mobility profile.

For these reasons, three different values for $\Delta T$ ($\Delta T1$, $\Delta T2$ and $\Delta T3$) are usually defined for the "Pedestrian", "Low" and "High" mobility profiles, respectively. Obviously, the choice of is much less of a critical factor for a "static" MT.

If the error values are recorded in a table and arranged by Mobility Profiles, it is possible to choose the most suitable $\Delta T$ to use for a single MT.

Table 1 below is exemplary of such an approach.

Table 1: Prediction error for different $\Delta T$ values

| $\Delta T$ | Mean Error for different mobility profiles | | |
|---|---|---|---|
| | Pedestrian Mobility | Low Mobility | High Mobility |
| $\Delta T1$ | Error A | Error B | Error C |
| $\Delta T2$ | Error D | Error E | Error F |
| $\Delta T3$ | Error G | Error H | Error I |

The related procedure (which is exemplified by the block 102 in figure 2) starts by sampling the CINR value every $\Delta T3$ frames. $\Delta T3$ is set as an initial default value that corresponds to the smallest value considered for $\Delta T$. That enables - with reference to the note at which predictions are made - the (average) prediction error to settle (see figure 4) after a transient period of e.g. N=25 predictions. The average error is calculated and compared with Error G, Error H and Error I to estimate the right mobility profile. The value for (e.g. error G = pedestrian; error H = LOW MOBILITY: ERROR I = HIGH MOBILITY) $\Delta T$ is left unchanged or modified according to the mobility profile thus determined. The procedure continues comparing the average error with the values reported in the table to ensure that $\Delta T$ is correctly updated. Using this mechanism, $\Delta T$ is updated whenever the user changes its mobility profile. In general terms an increase in the error will cause the MT to be assigned to a "higher" mobility class, and the value for $\Delta T$ to be reduced, while a decrease in the error will cause the MT to be assigned to a "lower" mobility class and the value for $\Delta T$ to be increased.

The block 104 in figure 2 corresponds to the process of the BS receiving from the various MTs the CINR values every $\Delta T$ frames.

The QoS profile or class currently associated with a given MT is then identified in a step 106 starting from the connection identifier (CID) associated therewith as previously described.

Once the mobility Profile of a MT and the QoS class currently associated therewith have been identified, a proper MCS selection procedure is started as exemplified by the blocks 108 to 128 in figure 2.

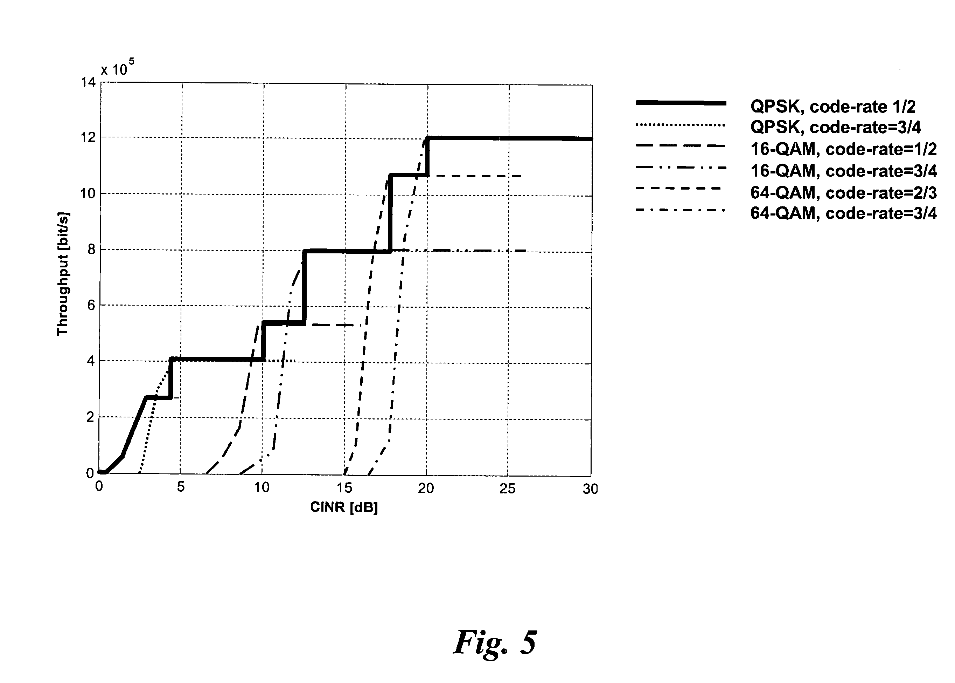

As an alternative to the prior art approach of "tracking" the envelope of the MCS performance curves as shown in figure 1, the arrangement described herein adopts a MCS Selection Criterion that operates only on flat zones of MCS curves as illustrated in figure 5. This essentially involves defining CINR thresholds (from one MCS to another). As already indicated, this approach involves using two different criteria, namely a Conservative Criterion and a Reactive Criterion.

Turning again to the flowchart of figure 2, the block 108 is exemplary of a selection step aiming at distinguishing whether services/applications belonging to certain QoS classes (e.g. "real time" classes such as UGS/ERT-VR/RT-VR) are involved.

If that is the case (i.e. the step 108 yields a positive outcome), in a step 110 the mobility degree associated to the "cluster" including the MT being considered is checked against a given mobility threshold (e.g. distinguishing a "pedestrian" from a "low" mobility). As a result of the check, a reactive MCS selection approach (step 112) or a conservative MCS selection approach (step 114) are adopted depending on whether the threshold is not exceeded (negative outcome of the step 110) or is exceeded (positive outcome of the step 110), respectively.

Typically, the reactive criterion exemplified by block 112 is used for nRT-VR and BE services, that support a retransmission mechanism. For that reason the BLER (BLock Error Rate) value is not a strict constrain and one of the main goals is to maximize the throughput. Considering a given CID, the Reactive Criterion selects the MCS as a function of the last CINR measure received. This CINR value is held valid until a new measurement is available every $\Delta T$ frames. The last measurement is directly compared with the CINR value thresholds and the MCS is selected.

This approach usually results in "high" MCSs being used more extensively than in the case of the Conservative Criterion of the step 114. The Reactive Criterion can reach high BLER values especially in high level mobility scenarios.

Conversely, this behavior is to be preferably avoided for services mapped onto RT-VR and ERT-VR QoS classes where retransmission mechanisms are not adopted, due to strict constraints in term of packet delay and jitter.

If the mobility threshold is exceeded, the MT involved will use the Conservative Criterion of block 114 to prevent high waste of data for every QoS class.

The Conservative Criterion does not compare the latest CINR measure with the CINR value thresholds directly, but rather collects N measures and selects the MCS by comparing a "conservative" value for CINR with the MCS thresholds. This conservative value for CINR is defined as follows:

$$CINR_{conservative} = \frac{1}{N}\sum_{i=1}^{N}CINR_i - \alpha\sigma_{CINR} \qquad (1)$$

where $\alpha$ is a "tuning" coefficient adapted to make equation 1 above more or less conservative by using as a safety margin the standard deviation $\sigma_{CINR}$ of the different measurements collected. Suitable values for N and $\alpha$ are obtained through experimentation or simulation. While increasing the value for $\alpha$ leads to lowering the throughput obtained, this approach permits to maintain the average BLER under a certain threshold.

Irrespective of whether the reactive approach of the step 112 or the conservative approach of the step 114 is adopted, the system subsequently performs a sequence of steps 116, 118, and 120 which duplicate the steps 100, 118, and 104 thus leading to possibly updating the value for $\Delta T$, after which the system loops back to the step 110.

A negative outcome of the steps 108 indicates that services/applications belonging to QoS classes other than "real time" classes such as UGS/ERT-VR/ are involved.

In that case, the same reactive MCS selection approach of the step 112 is applied in a step 122 without making any check as to mobility. Thereafter the system performs a sequence of steps 124, 126, and 128 which again duplicate the steps 100, 118, and 104 thus leading to possibly updating the value for $\Delta T$, after which the system loops back to the step 122.

Consequently, without prejudice to the underlying principles of the invention, the details and the embodiments may vary, even appreciably, with reference to what has been described by way of example only, without departing from the scope of the invention as defined by the annexed claims.

**Claims**

**1.** A method of adapting transmission over a radio link connecting a mobile terminal to a communication network, the method including the step of varying (112, 114, 122) the Modulation and Coding Scheme over said radio link as a function of a signal-to-disturbance ratio measured (104, 120, 128) over said link, wherein the method includes the steps of:

- determining at least one of a mobility profile (100, 116, 124) of said mobile terminal and a Quality of Service class (106, 108) associated with said link, and
- selecting (112, 114, 122) said Modulation and Coding Scheme as a function of both said signal-to-disturbance ratio and at least one of said mobility profile of said mobile terminal and said Quality of Service class associated with said link.

2. The method of claim 1, **characterized in that** it includes the steps of:

- collecting (104, 120, 128) at given time intervals measurements of said signal-to-disturbance ratio, and
- predicting (200) said signal-to-disturbance ratio within said time intervals from the collected measurements to produce prediction errors at the ends of said time intervals, wherein said prediction errors are indicative of the mobility profile of said mobile terminal, and
- determining said mobility profile of said mobile terminal as a function of said prediction errors.

3. The method of claim 2, **characterized in that** it includes the step of selectively varying the duration of said given time intervals as a function of said mobility profile of said mobile terminal.

4. The method of either of claims 2 or 3, **characterized in that** it includes the step of determining said mobility profile of said mobile terminal as a higher, respectively lower, mobility profile as said prediction error increases, respectively decreases.

5. The method of any of claims 2 to 4, **characterized in that** it includes the step of reducing, respectively extending, the duration of said given time intervals as a lower, respectively higher, mobility profile is determined for said mobile terminal.

6. The method of any of claims 2 to 5, **characterized in that** it includes the step of predicting said signal-to-disturbance ratio by means of an NLMS algorithm.

7. The method of any of the previous claims, **characterized in that** it includes the step of selecting said signal-to-disturbance as the Carrier to Interference-plus-Noise Ratio.

8. The method of claim 7, **characterized in that** it includes the step of selecting said signal-to-disturbance ratio as the average value of said Carrier to Interference-plus-Noise Ratio over the frequencies included in a frame preamble which is interfered directly frame preambles of interfering cells.

9. The method of any of claims 1 to 8, **characterized in that** it includes the step of determining said Quality of Service class associated with said link on the basis of the connection identifier associated with the connection carried by said link.

10. The method of any of the previous claims, **characterized in that** it includes the step of selecting said Modulation and Coding Scheme based on one of:

- a reactive criterion (112, 122) wherein said Modulation and Coding Scheme is selected as a function of the latest measurement of said signal-to-disturbance measurement available, and
- a conservative criterion (114), wherein said Modulation and Coding scheme is selected as a function of an average value of a plurality of measurements available for said signal-to-disturbance ratio.

11. The method of claim 10, **characterized in that** it includes, when applying said conservative criterion, the step of correcting said average value as a function of the standard deviation of said plurality of measurements of said signal-to-disturbance ratio.

12. The method of claim 10, **characterized in that** it includes the step of adopting said reactive criterion if:

- the Quality of Service class associated with said link supports a retransmission mechanism,

- if the Quality of Service class associated with said link does not support a retransmission mechanism and a lower mobility profile is determined for said mobile terminal.

13. The method of any claims 10 to 12, **characterized in that** it includes the step adopting said conservative criterion (114) if a high mobility profile is determined for said mobile terminal.

14. A system for adapting a radio link connecting a mobile terminal to a communication network, wherein the system is configured for performing the method of any of claims 1 to 13.

15. The system of claim 14, **characterized in that**, wherein said communication network includes at least one base station, the system is arranged with said at least one base station.

16. A mobile communication network including at least one radio link connecting a mobile terminal to the network, **characterized in that** it includes a system according to either of claims 14 or 15.

17. The network of claim 16, **characterized in that** the network is implemented as a WiMAX system (IEEE802.16e standard).

18. A computer program product, loadable into the memory of at least one computer and including software code portions for performing the method of any of claims 1 to 13.

Fig. 1

EP 1 873 951 A1

*Fig. 2*

EP 1 873 951 A1

$CINR_R(n)$

$CINR_P(n+1)$

200

$CINR_R(n+1)$

Error(n+1)

*Fig. 3*

*Fig. 4*

*Fig. 5*

EP 1 873 951 A1

**European Patent Office**

**EUROPEAN SEARCH REPORT**

Application Number

EP 06 42 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 309 120 A (LUCENT TECHNOLOGIES INC [US]) 7 May 2003 (2003-05-07)<br><br>* paragraphs [0015], [0027], [0028], [0034] *<br>----- | 1,2,4, 6-8, 14-18 | INV.<br>H04L1/00 |
| X | US 6 075 797 A (THOMAS NICHOLAS A [US]) 13 June 2000 (2000-06-13)<br><br>* column 5, line 61 - column 7, line 6 *<br>----- | 1,2,4, 6-9, 14-18 | |
| X | WO 02/089497 A2 (TANTIVY COMM INC [US]) 7 November 2002 (2002-11-07)<br>* page 8, line 8 - line 12 *<br>* page 10, line 23 - line 31 *<br>* page 11, line 23 - line 25 *<br>* page 12, line 5 - line 14 *<br>* figures 3,5,6 *<br>----- | 1,9, 14-18 | |
| | | | TECHNICAL FIELDS SEARCHED (IPC)<br><br>H04L |

The present search report has been drawn up for all claims

| Place of search | Date of completion of the search | Examiner |
|---|---|---|
| The Hague | 21 December 2006 | Ghigliotti, Luciano |

EPO FORM 1503 03.82 (P04C01)

## ANNEX TO THE EUROPEAN SEARCH REPORT
## ON EUROPEAN PATENT APPLICATION NO.

EP 06 42 5449

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2006

| Patent document cited in search report | | | Publication date | Patent family member(s) | | | Publication date |
|---|---|---|---|---|---|---|---|
| EP 1309120 | A | | 07-05-2003 | US | 2003086393 | A1 | 08-05-2003 |
| US 6075797 | A | | 13-06-2000 | NONE | | | |
| WO 02089497 | A2 | | 07-11-2002 | CA | 2446123 | A1 | 07-11-2002 |
| | | | | CN | 1528083 | A | 08-09-2004 |
| | | | | EP | 1384375 | A2 | 28-01-2004 |
| | | | | JP | 2005501443 | T | 13-01-2005 |
| | | | | NO | 20034833 | A | 10-12-2003 |
| | | | | US | 2005192028 | A1 | 01-09-2005 |
| | | | | US | 2002160764 | A1 | 31-10-2002 |

EPO FORM P0459

For more details about this annex : see Official Journal of the European Patent Office, No. 12/82

**EP 1 873 951 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAVIER GOZALVEZ ; JOHN DUNLOP.** On the Dynamics of Link Adaptation Updating Periods for Packet Switched Systems. *Wireless Personal Communications,* 2002, vol. 23, 137-145
- **B. WIDROW ; M. KAMENETSKY.** On the Statistical Efficiency of the LMS Family of Adaptive Algorithms. *IEEE ijcnn,* 2003
- **A.M ADAS.** Using Adaptive Linear Prediction to Support Real-Time VBR Video Under RCBR Network Service Model. *IEEE/ACM Transactions on Networking,* October 1998, vol. 6 (5